# EUROPEAN PATENT APPLICATION

(11) **EP 4 819 655 A1**
(43) Date of publication of application: **07.10.2026**
(21) Application number: 24895579.1
(22) Date of filing: 20.06.2024
(51) Int. Cl.: H04W 8/08, H04W 28/02

(54) **DATA TRANSMISSION METHOD AND APPARATUS, AND STORAGE MEDIUM**

(30) Priority: 01.12.2023 CN 202311648493
(71) Applicant: ZTE CORPORATION, Shenzhen, Guangdong 518057 (CN)
(72) Inventor: XIE, Feng, Shenzhen, Guangdong 518057 (CN); WANG, Fei, Shenzhen, Guangdong 518057 (CN); LIU, Yu, Shenzhen, Guangdong 518057 (CN); YANG, Li, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100286
(87) International publication number: WO 2025/112476

(57) **Abstract**

The present invention relates to the technical field of communications, and provides a data transmission method and apparatus, and a storage medium. The data transmission method comprises: a base station generates a quality of service parameter, the quality of service parameter comprising at least one of the following: a quality of service control parameter used at a terminal side, a quality of service control parameter used at a base station side, and a data packet detection rule used at a base station side; the base station sends to a terminal the quality of service control parameter used at a terminal side; the base station establishes data connection with the terminal on the basis of the quality of service parameter and performs data transmission.

## Description

### CROSS-REFERENCE

The present disclosure claims priority to Chinese Patent Application No. 202311648493.5, filed with the China National Intellectual Property Administration on December 1, 2023, and entitled "Data Transmission Method, Apparatus and Storage Medium", the entire contents of which are incorporated herein by reference.

### TECHNICAL FIELD

The present disclosure relates to the field of communication technologies, and in particular, to a data transmission method, an apparatus and a storage medium.

### BACKGROUND

The application of artificial intelligence technology in the 5th Generation mobile communication technology (5G) network has promoted intelligent development of mobile communication networks and vertical industries. However, application modes of "patching" and "tag-on service" have hindered an exertion of an application effect of artificial intelligence (AI).

Meanwhile, the application and exploration of artificial intelligence in various industries have put forward demands for new basic capabilities of future networks. Facing a future vision of ubiquitous intelligence, the sixth generation mobile communication technology (6G) network needs to have native AI capabilities. The native AI of the 6G network requires that a 6G network architecture natively provide a complete operating environment for a full life cycle of AI workflows such as data collection, data preprocessing, model training, model inference, and model evaluation, and deeply integrate a computing power, data, algorithms, and connections required for an AI service with a network function, a protocol, and a process. A network environment will become more complex, and an amount and delay of signaling transmission will be increased greatly after the network supports native AI. Therefore, a data transmission method is urgently needed to improve network efficiency and performance.

### SUMMARY

Embodiments of the present disclosure provide a data transmission method, an apparatus and a storage medium, which are used to change a generation source of a quality of service parameter, thereby simplifying a signaling interaction process. The technical solutions provided by the embodiments of the present disclosure are as follows.

In an aspect, a data transmission method is provided, and the method is applied to a base station. The method includes: generating a quality of service parameter, where the quality of service parameter includes at least one of: a service quality control parameter adopted by a terminal side, a service quality control parameter adopted by a base station side, or a data packet detection rule adopted by the base station side; and establishing a data connection with a terminal based on the quality of service parameter and performing data transmission.

In another aspect, a data transmission method is provided, and the method is applied to a terminal. The method includes: receiving, in a process of establishing a data connection, a service quality control parameter adopted by a terminal side sent from a base station, where the service quality control parameter adopted by the terminal side belongs to a quality of service parameter generated by the base station; and performing data transmission with the base station based on the service quality control parameter adopted by the terminal side.

In yet another aspect, a data transmission apparatus is provided, and the apparatus is applied to a base station. The apparatus includes: a processing module and a communication module. The processing module is configured to generate a quality of service parameter, where the quality of service parameter includes at least one of: a service quality control parameter adopted by a terminal side, a service quality control parameter adopted by a base station side, or a data packet detection rule adopted by the base station side; and the communication module is configured to establish a data connection with a terminal based on the quality of service parameter and perform data transmission.

In yet another aspect, a data transmission apparatus is provided, and the apparatus is applied to a terminal. The apparatus includes: a communication module. The communication module is configured to, receive, in a process of establishing a data connection, a service quality control parameter adopted by the terminal side sent from a base station, where the service quality control parameter adopted by the terminal side belongs to a quality of service parameter generated by the base station; and the communication module is further configured to perform data transmission with the base station based on the service quality control parameter adopted by the terminal side.

In yet another aspect, a communication apparatus is provided. The apparatus includes: a memory and a processor; where the memory and the processor are coupled to each other; the memory is configured to store computer program instructions executable by the processor; and upon executing the computer program instructions, the processor implements the data transmission method according to any one of the above embodiments.

In yet another aspect, a computer-readable storage medium is provided, having computer program instructions stored thereon, and the computer program instructions, upon being run on a computer (e.g., a communication apparatus or a signal transmission apparatus), implement the data transmission method according to any one of the above embodiments.

In yet another aspect, a computer program product is provided. The computer program product includes computer program instructions, and the computer program instructions, upon being executed, implement the data transmission method according to any one of the above embodiments.

### BRIEF DESCRIPTION OF THE DRAWINGS

FIG. 1 is a schematic diagram of a principle of classification and marking of user plane traffic and mapping of a QoS (Quality of Service) Flow to a radio resource provided by the embodiments of the present disclosure.
FIG. 2 is an interaction flowchart of an existing standard session establishment process provided by the embodiments of the present disclosure.
FIG. 3 is a schematic diagram of an architecture of a communication system provided by the embodiments of the present disclosure.
FIG. 4 is a schematic flowchart of a data transmission method provided by the embodiments of the present disclosure.
FIG. 5 is a schematic flowchart of another data transmission method provided by the embodiments of the present disclosure.
FIG. 6 is an interaction flowchart of a data transmission method provided by the embodiments of the present disclosure.
FIG. 7 is an interaction flowchart of another data transmission method provided by the embodiments of the present disclosure.
FIG. 8 is a schematic diagram of a structure of a data transmission apparatus provided by the embodiments of the present disclosure.
FIG. 9 is a schematic diagram of a structure of another data transmission apparatus provided by the embodiments of the present disclosure.
FIG. 10 is a schematic diagram of a structure of a communication apparatus provided by the embodiments of the present disclosure.

### DETAILED DESCRIPTION

The technical solutions in the embodiments of the present disclosure will be described clearly and completely below with reference to the accompanying drawings in the embodiments of the present disclosure. However, the described embodiments are merely some of the embodiments of the present disclosure, rather than all of the embodiments. Based on the embodiments in the present disclosure, all other embodiments obtained by a person of ordinary skill in the art without making creative effort shall belong to the protection scope of the present disclosure.

In the description of the present disclosure, unless otherwise specified, "/" means "or". For example, A/B may mean A or B. "And/or" herein is merely an association relationship describing associated objects, indicating that three relationships may exist. For example, A and/or B may mean: A alone, both A and B, and B alone. In addition, "at least one" means one or more, and "multiple/plurality of" means two or more. Wordings such as "first", "second", etc. do not limit the number and execution order, and the wordings such as "first", "second", etc. also do not limit the defined objects must be different from each other.

It should be noted that, in the present disclosure, the wordings "exemplary" or "for example" are used to mean serving as an example, illustration, or explanation. Any embodiment or design solution described as "exemplary" or "for example" in the present disclosure should not be construed as being more preferred or more advantageous than other embodiments or design solutions. To be specific, the usage of the wordings "exemplary" or "for example" is intended to present related concepts in a specific manner.

### Quality of Service (QoS) System Overview

5G QoS characteristics define a characteristic parameter set when each network node processes each QoS flow. The characteristic parameter set is divided into a standardized QoS characteristic and an operator-specific QoS characteristic. Herein, the standardized QoS characteristic is associated with a fixed 5G QoS identifier (5QI).

The 5QI is a scalar used as a reference for the 5G QoS characteristics. That is, the 5QI is an access node-specific parameter that controls a QoS forwarding and processing of a QoS Flow.

In standard 23.501 g70, the following content is described for 5QI:
1) 5G QoS characteristics: the 5G QoS characteristics associated with the 5QI describe an edge-to-edge packet forwarding and processing of a QoS Flow between a UE and a UPF, specifically expressed as the following performance characteristics:
1. Resource type (Non-Guaranteed Bit Rate (GBR), GBR, and Delay-critical GBR).
2. Priority level.
3. Packet error rate.
4. Packet delay budget (including core network packet delay budget).
5. Averaging window (applicable only to GBR and Delay-critical GBR resource types).
6. Maximum data burst volume (applicable only to Delay-critical GBR resource type).

2) Standardized 5QI to QoS characteristic mapping: standardized 5QI values are specified for services that are considered to be frequently used and for which signaling is optimized by using the standardized QoS characteristic. Dynamically allocated 5QI values (which require signaling the QoS characteristics as a part of a QoS profile) may be used for services that do not have standardized 5QI values defined. A one-to-one mapping of standardized 5QI values to 5G QoS characteristics may be specified in table 1. Herein, table 1 only shows some examples.

**Table 1**

| 5QI value | Resource type | Default priority level | Packet delay budget | Packet error rate | Default maximum data | Default average window | Example Service |
|---|---|---|---|---|---|---|---|
| | | | | | burst volume | | |
| 1 | GBR | 20 | 100ms | 10⁻² | N/A | 2000ms | Conversational voice |
| 2 | GBR | 40 | 150ms | 10⁻³ | N/A | 2000ms | Conversational video (live streaming) |

Within a protocol data unit (PDU) session, there is a unique QoS Flow ID (QFI) used to identify a QoS Flow (QFI corresponds with 5QI in a one-to-one correspondence, but it is not excluded that this relationship may be decoupled in future releases). 5G performs QoS guarantee based on QoS Flow. The QoS Flow is controlled by a service management function (SMF) entity and is established or reconfigured via a PDU session establishment procedure and a PDU session modification procedure.

### QoS Parameters

The 5G core network uses QoS parameters to configure a quality of service parameter, so as to implement QoS guarantee and control at different network nodes. The quality of service parameter includes at least one of: a service quality control parameter adopted by a terminal side (referred to as QoS Rule), a service quality control parameter adopted by a base station side (referred to as QoS Profile), or a data packet detection rule adopted by the base station side (Packet Detection Rule, PDR).

Herein, 1) the QoS Profile is configured by the SMF to the base station via an access and mobility management function (AMF) using an N2 interface, so as to implement QoS control at the base station side. 2) The QoS Rule and the QoS parameters are configured by the SMF to the terminal via the AMF using an N1 interface, or the terminal implements QoS control at the terminal side via reflective QoS. 3) The PDR is provided by the SMF to a user plane function (UPF), and implements QoS control at a UPF node.

The QoS control parameter QoS Profile used by the base station (gNB) is transmitted by the SMF to the gNB via the AMF using a PDU session resource modify request message and a PDU session resource setup request message. Each QoS Profile is associated with a QFI. The QoS Profile consists of parameters such as a 5QI, allocation and retention priority (ARP), a reflective QoS attribute (RQA), a guarantee flow bit rate (GFBR) and a maximun flow bit rate (MFBR), notification control, and a maximum packet loss rate (MPLR).

The QoS control parameter QoS Rule used by the terminal is used by the terminal to perform allocation and marking of an uplink user plane data service (the QoS Rule associates uplink data with a corresponding QoS Flow). The QoS Rule generated by AMF is explicitly provided to the terminal via a session creation or modification procedure (PDU Session Establishment/Modification Procedure), or the QoS Rule generated by AMF is pre-configured or the QoS Rule generated by AMF is implicitly provided to the terminal. A content of the QoS Rule includes: 1) a QFI of a QoS Flow associated with the QoS Rule; 2) a packet filter set (PFS); 3) a relative precedence value of the QoS Rule. In an uplink direction, upon uplink data is generated: (1) the terminal compares an uplink data packet with the packet filter set in a plurality of QoS Rules, and the comparison must be performed in an order indicated by a precedence value until a QoS Rule matching the data packet is found (a packet filter of this QoS Rule matches the uplink data packet); 2) if no matching QoS Rule is found, the packet is discarded; (3) the terminal uses a QFI corresponding to a matched QoS Rule to mark user data and associate the QFI with a corresponding QoS Flow, and maps the QoS Flow to a radio air interface resource at a service data adaptation protocol (SDAP) layer; (4) an access network (including the base station) transmits the QoS Flow to the UPF via an N3 interface; (5) the UPF verifies whether the QFI value is associated with a QoS Rule sent to the terminal, or whether the QFI value is derived by the terminal from reflective QoS; (6) the UPF uses the PDR to perform a session aggregate maximum bit rate (Session-AMBR) operation, and counts the packets for charging.

The QoS control parameter used by the UPF is PDR. A content of the PDR includes: 1) an uplink packet filter or a downlink packet filter of a service data flow template (SDF template); 2) PDR priority; 3) QoS enforcement rules, such as a service data flow (SDF) maximum bit rate, a GFBR and a GBR QoS Flow maximum bit rate; 4) forwarding action rules; 5) reflective QoS indication. The PDR is sent by the SMF to the UPF via an N4 session management (e.g., N4 Session Establishment or N4 Session Modification) procedure of N4.

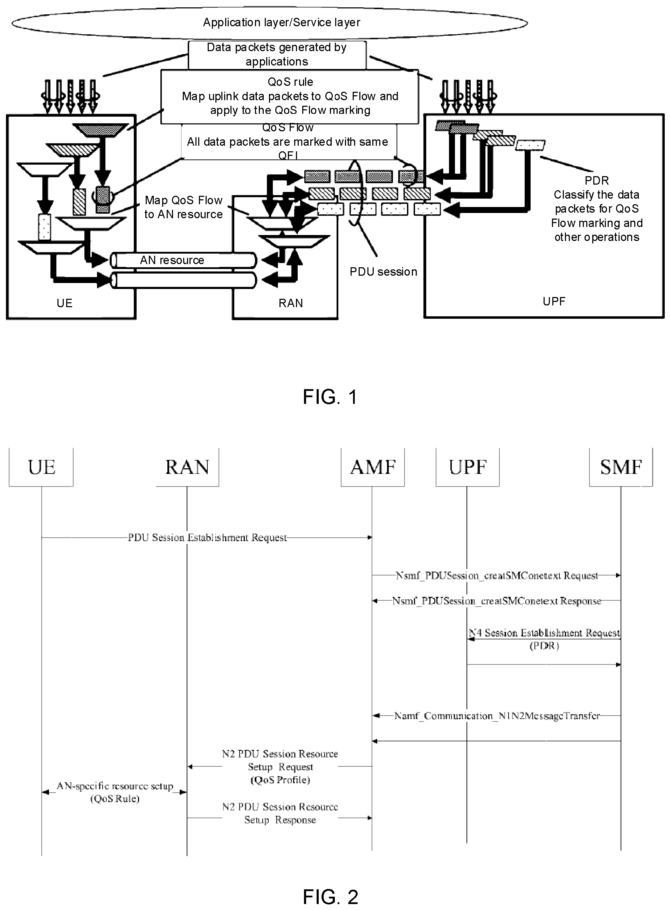

Exemplarily, FIG. 1 provides a schematic diagram of a principle of classification and marking of user plane traffic and mapping of a QoS Flow to a radio resource.

### Data flow mapping and QoS control process

In a downlink direction, upon downlink data arrives: 1) an operation of the UPF includes classifying data, marking the data with a QFI, performing QoS control, and forwarding the data to the terminal. 2) The UPF uses the PDR to perform user data flow detection and map the detected user data flow to the QoS Flow. 3) The UPF performs operations such as Session-AMBR, and counts the packets for charging. 4) The UPF encapsulates the QFI and activation indication information of reflective QoS into header information and transmits the encapsulated header information to a radio access network (RAN).

On a gNB side, a gNB maps the QoS Flow to an air interface radio resource via a RAN side rule (not a 1:1 mapping, a mapping rule is determined by a SDAP layer of the base station), and performs a QoS operation according to a QoS configuration.

In the uplink direction, upon uplink data is generated: 1) the terminal uses the QFI corresponding to the matched QoS Rule to mark user data and associate the QFI with the corresponding QoS Flow, and maps the QoS Flow to the radio air interface resource at the SDAP layer; 2) the access network transmits the QoS Flow to the UPF via the N3 interface; 3) the UPF verifies whether the QFI value is associated with the QoS Rule sent to the terminal, or whether the QFI value is derived by the terminal from reflective QoS; 4) the UPF uses the PDR to perform the Session-AMBR operation, and counts the packets for charging.

The future network will be an intelligent network. Currently, AI processing is mainly concentrated in a cloud. However, for AI use cases specific to an air interface, such as CSI (Channel State Information) feedback optimization, beam management, and positioning, uploading a large amount of data to the cloud via a terminal or a RAN will occupy a large amount of resources and have a long interaction delay. If the terminal and the RAN also have functions of data collection, model training, and model storage, that is, entities of the data collection, the model training, and the model storage may be the RAN or the terminal, then an overhead will be greatly reduced.

Model transmission scenarios may include: the terminal requests an AI model, and the RAN sends a trained AI model to the terminal; the terminal requests model transmission, and sends its own trained model to the RAN. The RAN requests an AI model, and the terminal sends the trained AI model to the base station; the RAN requests model transmission, and sends its own AI model to the terminal. From the above processes, it can be seen that the RAN or the terminal needs to have certain computing power, storage, and data processing capabilities. Upon the RAN sends data generated by the RAN itself to the terminal, an interaction process of session establishment may be further simplified.

Exemplarily, as shown in FIG. 2, taking an example in which a current standard session establishment process configures QoS related parameters, the terminal first sends an NAS (Non-Access Stratum) message (i.e., a PDU session establishment request) to the AMF. The AMF respectively performs an SMF selection, a PDU Session secondary authentication and authorization, SMF performs a PCF (Policy Control Function) selection, the SMF performs a UPF selection, and the SMF sends Namf_Communication_N1N2MessageTransfer to the AMF. Herein, the message contains N2 SM information and N1 SM Container information, which are sent to the RAN and the terminal respectively. In a following process, the QoS parameters are also transmitted in the following procedure.

QoS Profile: the QoS control parameter QoS Profile used by the gNB includes the 5QI, the ARP, the RQA, the GFBR, the MPLR, etc. The QoS Profile is transmitted by the SMF to the gNB via the AMF using the N2 interface (PDU Session Resource Modify Request message and PDU Session Resource Setup Request message).

QoS Rule: the QoS control parameter QoS Rule used by the terminal is used by the terminal to perform allocation and marking of uplink user plane data services (that is, the QoS Rule associates uplink data with the corresponding QoS Flow). The QoS Rule is explicitly provided to the terminal by the SMF via the AMF using the N1 interface PDU Session Establishment/Modification Procedure, or the QoS Rule is pre-configured or the QoS Rule is implicitly provided to the terminal.

PDR: the content of the QoS control parameter PDR used by the UPF includes: 1) the uplink packet filter or the downlink packet filter of the SDF template; 2) the PDR priority; 3) the QoS enforcement rules, such as the SDF maximum bit rate, the GFBR and the GBR QoS Flow maximum bit rate; 4) the forwarding action rules; 5) the reflective QoS indication. The PDR is sent by the SMF to the UPF via the N4 Session management (e.g., N4 Session Establishment or N4 Session Modification) procedure of N4.

For future communication systems, for new data generated within the RAN such as AI, the network environment will be more complex, and an amount of signaling transmission and delay will be increased greatly. Therefore, a data transmission method is urgently needed to simplify an interaction process of signaling, so as to improve network efficiency and performance.

In view of this, the present disclosure proposes a data transmission method, in which a quality of service parameter is generated via a base station, where the quality of service parameter includes at least one of: a service quality control parameter adopted by a terminal side, a service quality control parameter adopted by a base station side, or a data packet detection rule adopted by the base station side. Compared with related art in which a core network element is responsible for generating and sending these quality of service parameters, the present disclosure changes a generation source of these quality of service parameters, increases a parameter and a type contained in the quality of service parameter, and the base station generates and sends these quality of service parameters, which simplifies a signaling interaction process, reduces a number of signaling transmissions, and improves a response speed of a network.

The data transmission method provided by the embodiments of the present disclosure may be applied to systems of various communication standards. For example, the systems to which the data transmission method provided by the embodiments of the present disclosure may be applied include, but are not limited to, a long term evolution (LTE) system, various versions evolved based on LTE, a fifth generation (5G) system, and other communication systems. In addition, the method for sending and receiving system messages provided by the embodiments of the present disclosure may also be applied to future-oriented communication systems (e.g., a 6G communication system) and the like.

In the embodiments of the present disclosure, a network architecture of a mobile communication network (including but not limited to 3G, 4G, 5G, and future mobile communication networks) may at least include a first communication node and a second communication node. It should be understood that, in this example, in downlink, the first communication node may be a network side device (e.g., including but not limited to a base station), and the second communication node may be a terminal side device (e.g., including but not limited to a terminal). Of course, in uplink, the first communication node may also be a terminal side device, and the second communication node may also be a network side device. In a case where two communication nodes are in device-to-device (D2D) communication, the first communication node and the second communication node both may be base stations or terminals. The first communication node and the second communication node may be referred to as a first node and a second node for short, respectively.

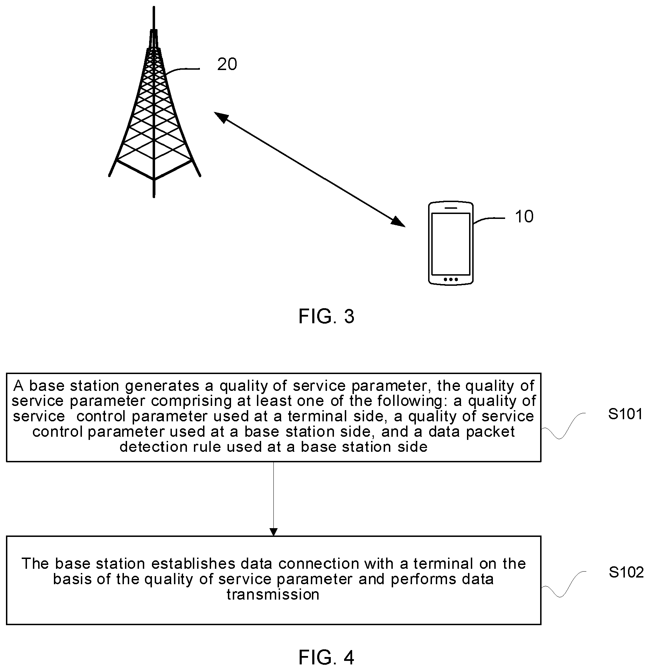

Exemplarily, taking an example in which the first communication node is a terminal and the second communication node is a base station, as shown in FIG. 3, a communication system provided by the embodiments of the present disclosure includes a terminal 10 and a base station 20. There may be one or more terminals 10 and base stations 20, and numbers of terminal(s) 10 and base station(s) 20 are not limited thereto.

In some embodiments, the base station 20 provides a wireless access service for the terminal 10. A base station 20 provides at least one service coverage area (which may also be referred to as a cell). The terminal 10 entering the area may communicate with the base station 20 via a wireless signal, so as to receive the wireless access service provided by the base station 20.

In some embodiments, the base station may be a base station in long term evolution (LTE) or long term evolution advanced (LTEA) or an evolutional node B (eNB or eNodeB), a base station device in a 5G network, or a base station in a future communication system, etc. The base station may include various network side devices such as various macro base stations, micro base stations, home base stations, wireless remote units, reconfigurable intelligent surfaces (RISs), routers, relays, transmission receive points (TRPs), and wireless fidelity (WIFI) devices.

In some embodiments, the terminal may be a device with a wireless transceiving function. The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, and so on. The embodiments of the present disclosure do not limit the application scenarios. The terminal may sometimes also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited in the embodiments of the present disclosure.

It should be noted that FIG. 3 is only an exemplary diagram of an architecture. The number of devices included in FIG. 3 and the names of the devices are not limited, and in addition to the devices shown in FIG. 3, the communication system may further include other devices, such as a core network device.

The application scenarios of the embodiments of the present disclosure are not limited herein. The system architecture and service scenarios described in the embodiments of the present disclosure are for a purpose of illustrating the technical solutions of the embodiments of the present disclosure more clearly, and do not constitute a limitation on the technical solutions provided by the embodiments of the present disclosure. A person of ordinary skill in the art may know that with the evolution of the network architecture and the emergence of new service scenarios, the technical solutions provided by the embodiments of the present disclosure are also applicable to similar technical problems.

The embodiments of the present disclosure provide a data transmission method, and the method is applied to a base station. As shown in FIG. 4, the method at least includes S101 to S102.

In S101: a base station generates a quality of service parameter, where the quality of service parameter includes at least one of: a service quality control parameter adopted by a terminal side, a service quality control parameter adopted by a base station side, or a data packet detection rule adopted by the base station side.

In some embodiments, the service quality control parameter adopted by the base station side may be referred to as QoS Profile, the service quality control parameter adopted by the terminal side may be referred to as QoS Rule, and the data packet detection rule adopted by the base station side may be referred to as PDR, which is not limited thereto.

In some embodiments, the quality of service parameter is determined by a core network; or, the quality of service parameter is determined by the base station; or, the quality of service parameter is determined by the base station under an instruction of the core network.

In some embodiments, the service quality control parameter adopted by the base station side includes a service quality characteristic parameter, where the service quality characteristic parameter includes at least one of: a model size, a number of model parameters, or a resource type. Herein, the resource type includes at least one of: a first type or a second type; where the first type is a type related to artificial intelligence, and the second type is a type related to other services except communication services.

For example, the second type is a comprehensive service type. The comprehensive service type herein refers to a type related to other services except communication services, such as computing, sensing, and intelligent service types.

Herein, two parameters of the model size and the number of model parameters are applicable to a type related to artificial intelligence, and are used to characterize a size (unit: Mbyte) and a number of parameters of an AI model.

Exemplarily, in order to adapt to the above embodiments, a protocol is modified for the 5G QoS characteristics related to 5QI. These characteristics describe a packet forwarding and processing mode of a QoS Flow from the UE to the UPF, and these characteristics, after modification, are specifically expressed as the following performance characteristics:
1. Resource type (Non-GBR, GBR, Delay-critical GBR, and AI service).
2. Priority level.
3. Packet delay budget (including core network packet delay budget).
4. Packet error rate.
5. Averaging window (applicable only to GBR and Delay-critical GBR resource types).
6. Maximum data burst volume (applicable only to Delay-critical GBR resource type).
7. Model size.
8. Number of model parameters.

In some embodiments, the service quality control parameter adopted by the base station side includes a computing power parameter.

In some embodiments, the computing power parameter includes at least one of: a data privacy level, floating point operations per second (FLOPS), or a generalization performance parameter.

Herein, the data privacy level is a node range, within which data may be interacted, determined by the base station according to a sensitivity degree and a privacy requirement of data. Different data privacy levels represent different data transmission ranges and protection levels. An appropriate data privacy level may be selected to ensure correct data processing and protection according to the sensitivity and the privacy requirement of the data.

The FLOPS characterizes at least one of: a computing power size required per second for this AI task, trillions of operations per second (TOPs), or multiply-accumulate operations (MACs). In this way, the base station may determine a computing power resource that needs to be allocated to a service according to the FLOPS.

The generalization performance parameter is an indicator for evaluating model performance in machine learning, and the generalization performance parameter characterizes an ability of a model to be universal in different scenarios. The generalization performance parameter may help evaluate and select a model with better performance in a practical application.

In some embodiments, the base station may determine a node with which the data may be interacted according to the data privacy level. Herein, options of the data privacy level include: data transmission only involves the UE and the RAN (including OAM (Operations, Administration and Maintenance)), UE internal data, and data transmission involves the UE, the RAN and the CN. A definition of internal data is that original data only exists inside one or more entities, and external transmission needs to be encrypted or only result data is transmitted externally.

In some embodiments, the generalization performance parameter is a ratio of a number of scenarios where a performance gain is higher than a preset ratio to a total number of scenarios under different scenario combinations (e.g., different deployments, different frequency points, indoor/outdoor, number of transceiving antennas, and a moving speed), compared with a baseline value. For example, there are a total of 1000 models participating in a result evaluation, and finally 900 models have a performance gain higher than 0.9%, then the generalization performance parameter of the model is 900/1000=90%.

Exemplarily, based on the description of the above embodiments, a relevant configuration of the QoS profile in the protocol may be modified and implemented as:
QoS Profile: a QoS Flow may be classified as "GBR" or "Non-GBR" according to the QoS profile of the QoS Flow. The QoS profile of the QoS Flow sends QoS parameters of the QoS profile to the (R)AN, and the QoS parameters include the following QoS parameters:
(1) For each QoS Flow, the QoS profile shall include the following QoS parameters: a 5G QoS identifier (5QI), and an allocation and retention priority (ARP).
(2) Only for a Non-GBR QoS Flow, the QoS profile may further include the following QoS parameter: a reflective QoS attribute (RQA).
(3) Only for a GBR QoS Flow, the QoS profile shall include the following QoS parameters: an uplink guarantee flow bit rate and a downlink guarantee flow bit rate (GFBR), and an uplink maximun flow bit rate and a downlink maximun flow bit rate (MFBR).
(4) Only for a GBR QoS Flow, the QoS profile may further include one or more of the following QoS parameters: notification control, an uplink maximum packet loss rate and a downlink maximum packet loss rate, FLOPS (Floating Point Operations per Second)/TOPs/MACs, a data privacy level, or a generalization performance parameter.

It can be understood that as functions of the base station expand from communication functions to support for functions such as intelligence, sensing, and computing, the QoS Profile parameters and the QoS characteristics also need to be expanded. After the introduction of an AI service, a size of a model and a parameter of the model need to be specified, and the size of the model and the parameter of the model directly affect a magnitude of a required rate upon the model is transmitted. In addition, since the AI service requires not only a time-frequency-space-code type resource, a computing power parameter is further introduced into the service quality control parameter adopted by the base station side. Based on the computing power parameter, the base station may allocate computing resources for the AI service more accurately, where the computing resources include a processor performance, a memory capacity, a storage space, etc. In this way, efficient operation of the AI service on the base station side may be ensured, and the required computing requirement may be satisfied via configuring and managing these resources reasonably.

In S102: the base station establishes a data connection with a terminal based on the quality of service parameter and performs data transmission.

Herein, the data may be data of types such as a text, an image, an audio or a video, and the data may also be some new types of data, such as data related to artificial intelligence, data related to computing power, data related to sensing, or data related to network data collection or management.

Based on this, compared with the related art in which a core network element is responsible for generating and sending these quality of service parameters, the present disclosure changes the generation source of these quality of service parameters, increases the parameter and the type contained in the quality of service parameter, and the base station generates and sends these quality of service parameters, which simplifies a signaling interaction process, reduces the number of signaling transmissions, and improves a response speed of a network. Moreover, the base station and the terminal may establish a data connection based on the quality of service parameter and perform data transmission, which improves data transmission efficiency.

For example, for QoS Profile and PDR, the base station may autonomously generate the QoS Profile and the PDR according to the data generated by the base station under an instruction of the core network, thereby eliminating a signaling of the AMF sending the QoS Profile to the base station, and the base station undertakes some functions of the SMF and the UPF, generates the PDR, and performs packet filtering of downlink data according to the PDR. In addition, the QoS Rule may also be directly sent from the base station to the terminal via radio resource control (RRC) signaling, instead of the AMF transparently transmitting the QoS Rule to the UE via an NAS message, which reduces a number of signaling transmissions and improves network efficiency.

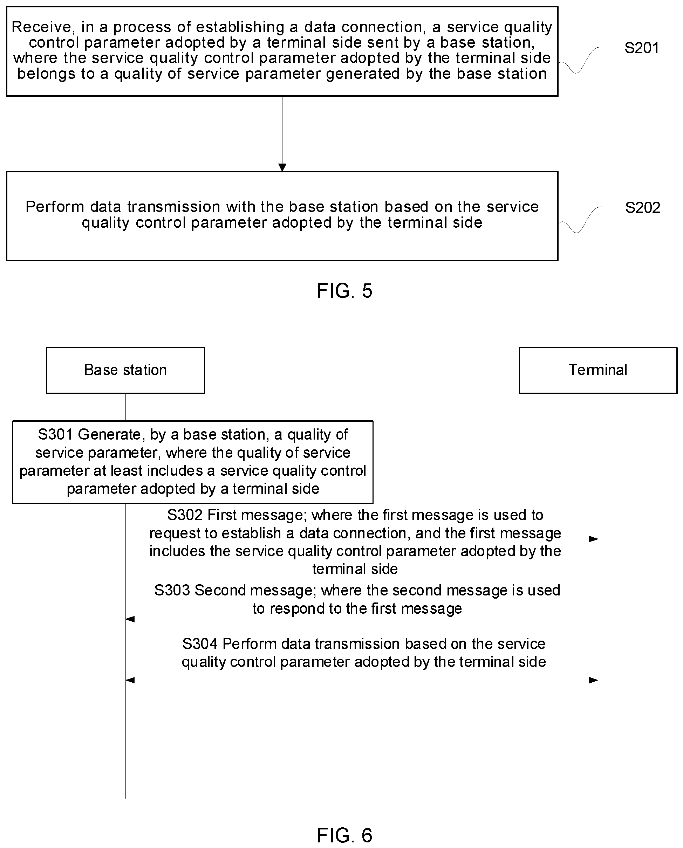

The embodiments of the present disclosure provide a data transmission method, and the method is applied to a terminal. As shown in FIG. 5, the method at least includes S201 to S202.

In S201: a terminal receives, in a process of establishing a data connection, a service quality control parameter adopted by a terminal side sent from a base station, where the service quality control parameter adopted by the terminal side belong to a quality of service parameter generated by the base station.

In some embodiments, the quality of service parameter further includes at least one of: a service quality control parameter adopted by a base station side or a data packet detection rule adopted by the base station side.

In some embodiments, the quality of service parameter is determined by a core network; or, the quality of service parameter is determined by the base station; or, the quality of service parameter is determined by the base station under an instruction of the core network.

In some embodiments, the service quality control parameter adopted by the base station side includes a service quality characteristic parameter, where the service quality characteristic parameter includes at least one of: a model size, a number of model parameters, or a resource type. Herein, the resource type includes at least one of: a first type or a second type; where the first type is a type related to artificial intelligence, and the second type is a type related to other services except communication services.

For example, the second type is a comprehensive service type. The comprehensive service type herein refers to a type related to other services except communication services, such as computing, sensing, and intelligent service types.

Exemplarily, in order to adapt to the above embodiments, the protocol is modified for the 5G QoS characteristics related to 5QI. These characteristics describe a packet forwarding and processing mode of a QoS Flow from the UE to the UPF, and these characteristics, after modification, are specifically expressed as the following performance characteristics:
1. Resource type (Non-GBR, GBR, Delay-critical GBR, and AI service).
2. Priority level.
3. Packet delay budget (including core network packet delay budget).
4. Packet error rate.
5. Averaging window (applicable only to GBR and Delay-critical GBR resource types).
6. Maximum data burst volume (applicable only to Delay-critical GBR resource type).
7. Model size.
8. Number of model parameters.

Herein, two parameters of the model size and the number of model parameters are applicable to the type related to artificial intelligence, and are used to characterize the size (unit: Mbyte) and the number of parameters of an AI model.

In some embodiments, the service quality control parameter adopted by the base station includes a computing power parameter.

In some embodiments, the computing power parameter includes at least one of: a data privacy level, floating point operations per second, or a generalization performance parameter.

Herein, for the content related to the computing power parameter, reference may be made to the description of the content related to the computing power parameters in S101.

In S202: the terminal performs data transmission with the base station based on the service quality control parameter adopted by the terminal side.

Herein, the data may be data of types such as a text, an image, an audio or a video, and the data may also be some new types of data, such as data related to artificial intelligence, data related to computing power, data related to sensing, or data related to network data collection or management.

Based on this, in the process of establishing the data connection, the terminal receives the service quality control parameter adopted by the terminal side sent from the base station, and performs data transmission with the base station based on the service quality control parameter adopted by the terminal side. Compared with the related art in which the service quality control parameter adopted by the terminal side is transparently transmitted by the AMF to the terminal via an NAS message, the number of signaling transmissions is reduced, and the network efficiency is improved.

The embodiments of the present disclosure provide another data transmission method. As shown in FIG. 6, the method at least includes S301 to S304.

In S301: a base station generates a quality of service parameter, where the quality of service parameter at least includes a service quality control parameter adopted by a terminal side.

Herein, the quality of service parameter is determined by a core network; or, the quality of service parameter is determined by the base station; or, the quality of service parameter is determined by the base station under an instruction of the core network.

In some embodiments, the quality of service parameter further includes at least one of: a service quality control parameter adopted by a base station side or a data packet detection rule adopted by the base station side.

In S302: the base station sends a first message to a terminal; correspondingly, the terminal receives the first message sent from the base station; where the first message is used to request to establish a data connection, and the first message includes the service quality control parameter adopted by the terminal side.

In some embodiments, the first message is carried in at least one of: a radio resource control (RRC) signaling, a media access control control element (MAC CE), or a non-access stratum (NAS) message.

In some embodiments, an encoding format adopted by the first message is a TLV format. Herein, the TLV format is a data format based on tag-length-value.

Herein, in the related art, a PDR NAS signaling belongs to the TLV format. For the sake of simplicity, the first message may also be sent to the terminal by using an RRC message carrying an encapsulated NAS message.

In S303: the terminal sends a second message to the base station; correspondingly, the base station receives the second message sent from the terminal; where the second message is used to respond to the first message.

In some embodiments, the second message is carried in at least one of: an RRC signaling, an MAC CE, or downlink control information (DCI).

In some embodiments, the second message may further be carried in an NAS message. In a case where the second message is carried in the NAS message rather than the RRC signaling, the second message needs to be sent to the core network at a same time for remarking, so as to execute a subsequent procedure.

In S304: the base station and the terminal perform data transmission based on the service quality control parameter adopted by the terminal side.

Herein, the data may be data of types such as a text, an image, an audio or a video, and the data may also be some new types of data, such as data related to artificial intelligence, data related to computing power, data related to sensing, or data related to network data collection or management.

Based on this, the service quality control parameter adopted by the terminal side are carried in the first message, generated by the base station, and directly sent to the terminal. Compared with the related art in which the AMF transparently transmits the service quality control parameter adopted by the terminal side to the UE via an NAS message, the number of signaling transmissions is reduced, and the network efficiency is improved.

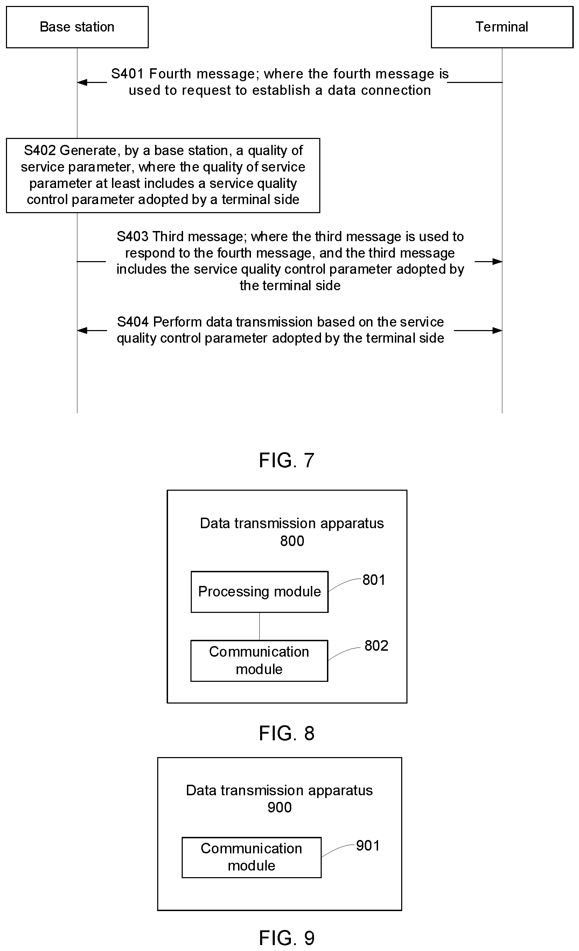

The present disclosure provides yet another data transmission method. As shown in FIG. 7, the method at least includes S401 to S404.

In S401: a terminal sends a fourth message to a base station; correspondingly, the base station receives the fourth message sent from the terminal; where the fourth message is used to request to establish a data connection.

In some embodiments, the fourth message is carried in at least one of: an RRC signaling, an MAC CE, or DCI.

In some embodiments, the fourth message may further be carried in an NAS message. In a case where the fourth message is carried in the NAS message rather than the RRC signaling, the fourth message is sent to the core network for remarking, so as to execute a subsequent procedure.

In S402: the base station generates a quality of service parameter, where the quality of service parameter at least includes a service quality control parameter adopted by a terminal side.

Herein, the quality of service parameter is determined by a core network; or, the quality of service parameter is determined by the base station; or, the quality of service parameter is determined by the base station under an instruction of the core network.

In some embodiments, the quality of service parameter further includes at least one of: a service quality control parameter adopted by a base station side or a data packet detection rule adopted by the base station side.

In S403: the base station sends a third message to the terminal; correspondingly, the terminal receives the third message sent from the base station; where the third message is used to respond to the fourth message, and the third message includes the service quality control parameter adopted by the terminal side.

In some embodiments, the third message is carried in at least one of: an RRC signaling, an MAC CE, or an NAS message.

In some embodiments, an encoding format adopted by the third message is a TLV format.

Herein, in the related art, a PDR NAS signaling belongs to the TLV format. For the sake of simplicity, the first message may also be sent to the terminal by using an RRC message carrying an encapsulated NAS message.

In S404: the base station and the terminal perform data transmission based on the service quality control parameter adopted by the terminal side.

Herein, the data may be data of types such as a text, an image, an audio or a video, and the data may also be some new types of data, such as data related to artificial intelligence, data related to computing power, data related to sensing, or data related to network data collection or management.

It can be understood that if the transmission only involves the RAN and the UE, then only relying on an RRC connection is sufficient, and an N2 connection becomes alternative. That is, upon the RAN and the UE perform internal data transmission, only the RRC connection may be established, or the RRC connection and the N2 connection may be established.

Based on this, the service quality control parameter adopted by the terminal side is carried in the third message, generated by the base station, and directly sent to the terminal. Compared with the related art in which the AMF transparently transmits the service quality control parameter adopted by the terminal side to the UE via an NAS message, the number of signaling transmissions is reduced, and the network efficiency is improved.

The above mainly introduces the solutions of the embodiments of the present disclosure from the perspective of methods. A data transmission apparatus is further shown below. The data transmission apparatus is used to execute the data transmission method in any one of the above embodiments and possible implementations thereof. A data transmission apparatus is used to execute the data transmission method in any one of the above embodiments and possible implementations thereof.

It can be understood that in order to implement the data transmission method, the data transmission apparatus includes corresponding hardware structures and/or software modules for executing various functions. Those of ordinary skill in the art should easily realize that in combination with the algorithm steps of the examples described in the embodiments of the present disclosure, the present disclosure can be implemented in a form of hardware or a combination of hardware and computer software. Whether a function is executed in the form of hardware or computer software driving hardware depends on a specific application and design constraint conditions of the technical solution. Professional technicians may use different methods to implement the described functions for each specific application, however, such implementation should not be considered to be beyond the scope of the present disclosure.

In the embodiments of the present disclosure, the data transmission apparatus may be divided into functional modules according to the above method embodiments. For example, each functional module may be divided corresponding to each function, or two or more functions may be integrated into a functional module. The above integrated module may be implemented in a form of hardware or in a form of software. It should be noted that the division of modules in the embodiments of the present disclosure is schematic and is merely a logical function division, and there may be other division modes in actual implementation. The following description is made by taking an example in which the division of each functional module corresponding to each function.

FIG. 8 is a data transmission apparatus provided by the embodiments of the present disclosure, and the apparatus is applied to a base station. The data transmission apparatus 800 includes: a processing module 801 and a communication module 802.

The processing module 801 is configured to generate a quality of service parameter, where the quality of service parameter includes at least one of: a service quality control parameter adopted by a terminal side, a service quality control parameter adopted by a base station side, or a data packet detection rule adopted by the base station side.

The communication module 802 is configured to establish a data connection with a terminal based on the quality of service parameter and perform data transmission.

In some embodiments, the communication module 802 is configured to, in a case where the quality of service parameter includes the service quality control parameter adopted by the terminal side, send the service quality control parameter adopted by the terminal side to the terminal.

In some embodiments, the communication module 802 is further configured to send a first message to the terminal, where the first message is used to request to establish a data connection, and the first message includes the service quality control parameter adopted by the terminal side.

In some embodiments, the communication module 802 is further configured to receive a second message sent from the terminal, where the second message is used to respond to the first message.

In some embodiments, the first message is carried in at least one of: a radio resource control (RRC) signaling, a media access control control element (MAC CE), or a non-access stratum (NAS) message; and the second message is carried in at least one of: an RRC signaling, an MAC CE, or downlink control information (DCI).

In some embodiments, the communication module 802 is further configured to send a third message to the terminal, where the third message is used to respond to a fourth message, and the third message includes the service quality control parameter adopted by the terminal side.

In some embodiments, the communication module 802 is further configured to receive the fourth message sent from the terminal, where the fourth message is used to request to establish a data connection.

In some embodiments, the third message is carried in at least one of: an RRC signaling, an MAC CE, or an NAS message; and the fourth message is carried in at least one of: an RRC signaling, an MAC CE, or DCI.

In some embodiments, the quality of service parameter is determined by a core network; or, the quality of service parameter is determined by the base station; or, the quality of service parameter is determined by the base station under an instruction of the core network.

In some embodiments, the service quality control parameter adopted by the base station side includes a service quality characteristic parameter, where the service quality characteristic parameter includes at least one of: a model size, a number of model parameters, or a resource type. Herein, the resource type includes at least one of: a first type or a second type; where the first type is a type related to artificial intelligence, and the second type is a type related to other services except communication services.

In some embodiments, the service quality control parameter adopted by the base station side includes a computing power parameter.

In some embodiments, the computing power parameter includes at least one of: a data privacy level, floating point operations per second, or a generalization performance parameter.

FIG. 9 is another data transmission apparatus provided by the embodiments of the present disclosure, and the apparatus is applied to a terminal. The data transmission apparatus 900 includes: a communication module 901.

The communication module 901 is configured to, receive, in a process of establishing a data connection, a service quality control parameter adopted by a terminal side sent from a base station, where the service quality control parameter adopted by the terminal side belong to a quality of service parameter generated by the base station; and
the communication module 901 is further configured to perform data transmission with the base station based on the service quality control parameter adopted by the terminal side.

In some embodiments, the communication module 901 is further configured to receive a first message sent from the base station, where the first message is used to request to establish a data connection, and the first message includes the service quality control parameter adopted by the terminal side.

In some embodiments, the communication module 901 is configured to send a second message to the base station, where the second message is used to respond to the first message.

In some embodiments, the first message is carried in at least one of: a radio resource control (RRC) signaling, a media access control control element (MAC CE), or a non-access stratum (NAS) message; and the second message is carried in at least one of: an RRC signaling, an MAC CE, or downlink control information (DCI).

In some embodiments, the communication module 901 is configured to receive a third message sent from the base station, where the third message is used to respond to a fourth message, and the third message includes the service quality control parameter adopted by the terminal side.

In some embodiments, the communication module 901 is configured to send the fourth message to the base station, where the fourth message is used to request to establish a data connection.

In some embodiments, the third message is carried in at least one of: an RRC signaling, an MAC CE, or an NAS message; and the fourth message is carried in at least one of: an RRC signaling, an MAC CE, or DCI.

In some embodiments, the quality of service parameter is determined by a core network; or, the quality of service parameter is determined by the base station; or, the quality of service parameter is determined by the base station under an instruction of the core network.

In some embodiments, the service quality control parameter adopted by the base station side includes a service quality characteristic parameter, where the service quality characteristic parameter includes at least one of: a model size, a number of model parameters, or a resource type. Herein, the resource type includes at least one of: a first type or a second type; where the first type is a type related to artificial intelligence, and the second type is a type related to other services except communication services.

In some embodiments, the service quality control parameter adopted by the base station includes a computing power parameter.

In some embodiments, the computing power parameter includes at least one of: a data privacy level, floating point operations per second, or a generalization performance parameter.

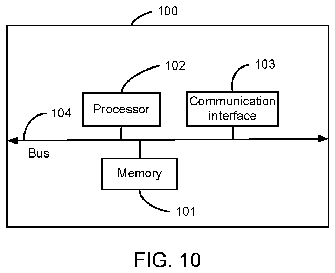

In a case of implementing the functions of the above integrated modules in the form of hardware, the embodiments of the present disclosure further provide a possible structure of a communication apparatus, and the communication apparatus is used to execute the data transmission method provided by the embodiments of the present disclosure. As shown in FIG. 10, the communication apparatus 100 includes: a communication interface 103, a processor 102, and a bus 104. Optionally, the communication apparatus may further include a memory 101.

The processor 102 may be configured to be a device implementing or executing various exemplary logical blocks, modules, and circuits described in combination with the embodiments of the present disclosure. The processor 102 may be a central processing unit, a general-purpose processor, a digital signal processor, an application specific integrated circuit, a field programmable gate array or other programmable logic devices, transistor logic devices, hardware components, or any combination thereof. The processor 102 may implement or execute various exemplary logical blocks, modules, and circuits described in combination with the embodiments of the present disclosure. The processor 102 may also be a combination that implements computing functions, for example, a combination including one or more microprocessors, a combination of a digital signal processor (DSP) and a microprocessor, etc.

The communication interface 103 is configured to connect to other devices via a communication network. The communication network may be Ethernet, a wireless access network, a wireless local area network (WLAN), etc.

The memory 101 may be a read-only memory (ROM) or other types of static storage devices that may store static information and instructions, a random access memory (RAM) or other types of dynamic storage devices that may store information and instructions, or may be an electrically erasable programmable read-only memory (EEPROM), a magnetic disk storage medium or other magnetic storage devices, or any other medium that may be used to carry or store desired program codes in a form of instructions or data structures and may be accessed by a computer, but is not limited thereto.

As a possible implementation, the memory 101 may exist independently of the processor 102, and the memory 101 may be connected to the processor 102 via the bus 104 for storing instructions or program codes. Upon the processor 102 revokes and executes the instructions or program codes stored in the memory 101, the data transmission method provided by the embodiments of the present disclosure may be implemented.

In another possible implementation, the memory 101 may also be integrated with the processor 102.

The bus 104 may be an extended industry standard architecture (EISA) bus, etc. The buses 104 may be classified into an address bus, a data bus, a control bus, etc. For ease of representation, only one thick line is used in FIG. 10, but it does not mean that there is only one bus or one type of bus.

Some embodiments of the present disclosure provide a computer-readable storage medium (e.g., a non-transitory computer-readable storage medium). The computer-readable storage medium is stored with computer program instructions. The computer program instructions, upon being run on a computer, enable the computer to execute the data transmission method described in any one of the above embodiments.

In an exemplary embodiment, the computer may be the above communication apparatus, and a specific form of the computer is not limited in the present disclosure.

In some examples, the above computer-readable storage medium may include, but is not limited to: magnetic storage devices (e.g., hard disks, floppy disks or magnetic tapes, etc.), optical disks (e.g., Compact Disk (CD), Digital Versatile Disk (DVD), etc.), smart cards and flash memory devices (e.g., Erasable Programmable Read-Only Memory (EPROM), cards, sticks or key drives, etc.). The various computer-readable storage media described in the present disclosure may represent one or more devices and/or other machine-readable storage media for storing information. The term "machine-readable storage medium" may include, but is not limited to, wireless channels and various other media that can store, contain and/or carry instructions and/or data.

The embodiments of the present disclosure provide a computer program product containing instructions. The computer program product, upon being run on a computer, enable the computer to execute the data transmission method described in any one of the above embodiments.

The above description is only specific implementations of the present disclosure, however, the protection scope of the present disclosure is not limited thereto. Any changes or substitutions within the technical scope disclosed in the present disclosure should be covered within the protection scope of the present disclosure. Therefore, the protection scope of the present disclosure should be subject to the protection scope of the claims.

## Claims

1. A data transmission method, applied to a base station, wherein the method comprises:
generating a quality of service parameter, wherein the quality of service parameter includes at least one of: a service quality control parameter adopted by a terminal side, a service quality control parameter adopted by a base station side, or a data packet detection rule adopted by the base station side; and
establishing a data connection with a terminal based on the quality of service parameter and performing data transmission.

2. The method according to claim 1, wherein the method further comprises:
sending the service quality control parameter adopted by the terminal side to the terminal, in a case where the quality of service parameter at least includes the service quality control parameter adopted by the terminal side.

3. The method according to claim 2, wherein the sending the service quality control parameter adopted by the terminal side to the terminal comprises:
sending a first message to the terminal, wherein the first message is used to request to establish the data connection, and the first message includes the service quality control parameter adopted by the terminal side.

4. The method according to claim 3, wherein the method further comprises:
receiving a second message sent from the terminal, wherein the second message is used to respond to the first message.

5. The method according to claim 4, wherein the first message is carried in at least one of: a radio resource control (RRC) signaling, a media access control control element (MAC CE), or a non-access stratum (NAS) message; and the second message is carried in at least one of: an RRC signaling, an MAC CE, or downlink control information (DCI).

6. The method according to claim 2, wherein the sending the service quality control parameter adopted by the terminal side to the terminal comprises:
sending a third message to the terminal, wherein the third message is used to respond to a fourth message, and the third message includes the service quality control parameter adopted by the terminal side.

7. The method according to claim 6, wherein before the sending the third message to the terminal, the method further comprises:
receiving the fourth message sent from the terminal, wherein the fourth message is used to request to establish the data connection.

8. The method according to claim 7, wherein the third message is carried in at least one of: an RRC signaling, an MAC CE, or an NAS message; and the fourth message is carried in at least one of: an RRC signaling, an MAC CE, or DCI.

9. The method according to claim 1, wherein the quality of service parameter is determined by a core network; or, the quality of service parameter is determined by the base station; or, the quality of service parameter is determined by the base station under an instruction of the core network.

10. The method according to claim 1, wherein the service quality control parameter adopted by the base station side includes a service quality characteristic parameter, wherein the service quality characteristic parameter includes at least one of: a model size, a number of model parameters, or a resource type; wherein the resource type includes at least one of: a first type or a second type; wherein the first type is a type related to artificial intelligence, and the second type is a type related to other services except communication services.

11. The method according to claim 1, wherein the service quality control parameter adopted by the base station side includes a computing power parameter.

12. The method according to claim 11, wherein the computing power parameter includes at least one of: a data privacy level, floating point operations per second, or a generalization performance parameter.

13. A data transmission method, applied to a terminal, wherein the method comprises:
receiving, in a process of establishing a data connection, a service quality control parameter adopted by a terminal side sent from a base station, wherein the service quality control parameter adopted by the terminal side belongs to a quality of service parameter generated by the base station; and
performing data transmission with the base station based on the service quality control parameter adopted by the terminal side.

14. The method according to claim 13, wherein the receiving the service quality control parameter adopted by the terminal side sent from the base station comprises:
receiving a first message sent from the base station, wherein the first message is used to request to establish the data connection, and the first message includes the service quality control parameter adopted by the terminal side.

15. The method according to claim 14, wherein the method further comprises:
sending a second message to the base station, wherein the second message is used to respond to the first message.

16. The method according to claim 15, wherein the first message is carried in at least one of: a radio resource control (RRC) signaling, a media access control control element (MAC CE), or a non-access stratum (NAS) message; and the second message is carried in at least one of: an RRC signaling, an MAC CE, or downlink control information (DCI).

17. The method according to claim 13, wherein the receiving the service quality control parameter adopted by the terminal side sent from the base station comprises:
receiving a third message sent from the base station, wherein the third message is used to respond to a fourth message, and the third message includes the service quality control parameter adopted by the terminal side.

18. The method according to claim 17, wherein before the receiving the third message sent from the base station, the method further comprises:
sending the fourth message to the base station, wherein the fourth message is used to request to establish the data connection.

19. The method according to claim 18, wherein the third message is carried in at least one of: an RRC signaling, an MAC CE, or an NAS message; and the fourth message is carried in at least one of: an RRC signaling, an MAC CE, or DCI.

20. The method according to claim 13, wherein the quality of service parameter is determined by a core network; or, the quality of service parameter is determined by the base station; or, the quality of service parameter is determined by the base station under an instruction of the core network.

21. The method according to claim 13, wherein the service quality control parameter adopted by the base station side includes a service quality characteristic parameter, wherein the service quality characteristic parameter includes at least one of: a model size, a number of model parameters, or a resource type; wherein the resource type includes at least one of: a first type or a second type; wherein the first type is a type related to artificial intelligence, and the second type is a type related to other services except communication services.

22. The method according to claim 13, wherein the service quality control parameter adopted by the base station includes a computing power parameter.

23. The method according to claim 22, wherein the computing power parameter includes at least one of: a data privacy level, floating point operations per second, or a generalization performance parameter.

24. A communication apparatus, comprising: a memory and a processor; wherein the memory and the processor are coupled to each other; the memory is configured to store instructions executable by the processor; upon executing the instructions, the processor executes the method according to any one of claims 1 to 23.

25. A computer-readable storage medium, having computer instructions stored thereon, and the computer instructions, upon being run on a communication apparatus, enable the communication apparatus to execute the method according to any one of claims 1 to 23.
